# EUROPEAN PATENT APPLICATION

(11) **EP 1 646 069 A1**
(43) Date of publication of application: **12.04.2006**
(21) Application number: 04738294.0
(22) Date of filing: 25.06.2004
(51) Int. Cl.: H01J 61/30, H01J 9/24

(54) **ENERGY-SAVING FLUORESCENT LAMP WITH AUTOMATICALLY FORMED BY SINGLE STEP AND FORING METHOD AND THE MOULD OF U-SHAPED TUBE UNIT**

(30) Priority: 27.06.2003 CN 03259029; 29.09.2003 CN 03135030
(71) Applicant: Xiamen Donglin Electronic Co. Ltd., Fujian 361000 (CN)
(72) Inventor: HE, Runlin, Huli, XiaMen, Fujian 361000 (CN)
(74) Representative: Johnstone, Helen Margaret
(86) International application number: PCT/CN2004/000696
(87) International publication number: WO 2005/001885

(57) **Abstract**

The present invention provides a compact fluorescent lamps (CFL) tube and a method and apparatus for manufacturing the same automatically in one-shot modeling. Said automatic one-shot-modeled compact fluorescent lamps (CFL) discharge tube is typically constituted of several said discharge tubes, wherein said discharge tube appears to an U-shaped glass tube with two close parallel leg tubes, and said both parallel leg tubes are bent to a curve with a certain curvature radius simultaneously, just as appearing to ")" shape in the side view. the present invention not only remains the high luminous flux per watt, shorten discharge tube and good cooling condition features, but also it can be suit to industrial scale production in one-shot modeling, especially to producing smaller power, and the diameter of the glass tube compact fluorescent lamps (CFL) discharge tube unit, with low production cost, high efficiency and low rejection.

## Description

### BACKGROUND OF THE INVENTION

### 1. Field of the Invention

The present invention relates to lighting technology, and more particularly to a compact fluorescent lamps (CFL) tube and a method and apparatus for manufacturing the same automatically in one-shot modeling.

### 2. Description of Prior Art

In accordance with the conventional compact fluorescent lamps (CFL), the most of them are configured to a columnar structure, such as U-shaped, n-shaped or H-shaped and so on, they are classified to cylinder light source, but this kind of compact fluorescent lamps (CFL) exists some shortcomings: one is that the emitted light from the inside surface of the discharge tube of the compact fluorescent lamps (CFL) is blocked by the adjacent or opposite discharge tubes, so the luminous flux per watt of the compact fluorescent lamps (CFL) is affected; the second is that the discharge tubes are arranged in so close that the heat generated by the discharge tubes can not be radiated soon to occur the heat quantity collecting to make the working space of the discharge tubes overheat, further to cause luminosity factor going down and lifespan shorten; the third is that the size of the discharge tube is so big in length.

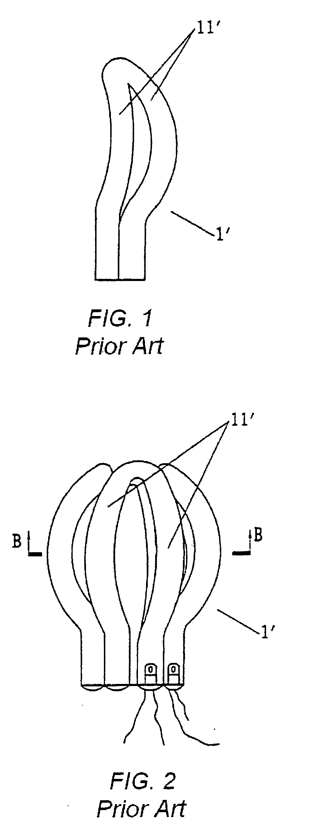

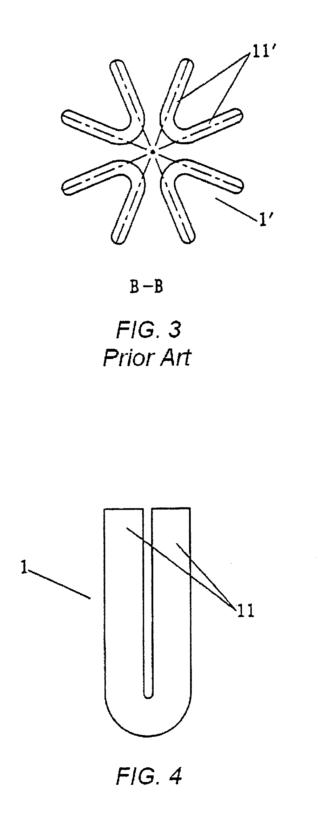

For resolving these problems, the case ZL01253432.3 provided "a ball-shaped compact fluorescent lamps (CFL)", as shown in Fig. 1 and Fig. 2, the lamp includes several discharge tube unit 1' connected together by jumpers in bridge linkage, the ball-shaped compact fluorescent lamps (CFL) is constituted of several petal-shaped discharge tubes 1' having a certain curvature radius, such as each leg tube 11' of the discharge tube 1' is arranged on the sphere surface in uniform distribution for obtaining ball-shaped homogeneous light and good distribution curve flux, in this way, the middle portion of the leg tubes 11 are gradually opened so that the gaps are in consistency and in max, as shown in Fig. 3, in radial uniform distribution facilitating to increase the gaps of the leg tubes 11' of the adjacent compact fluorescent lamps (CFL) tubes 1' and a discharge tube unit 1'. In this case, the whole ball compact fluorescent lamps (CFL) tube constituted of several discharge tubes 1' having curvature radius (actually being stereo-radian as shown in Fig. 3) has three advantages comparing with the prior art as follows: one is that the increased gap between the adjacent compact fluorescent lamps (CFL) discharge tube 1' makes the light given out from inside walls of the discharge tube 1' shoot out passing through the opposite gaps for obtaining uniform ball light source; the next is that the curved leg tubes 11' of the discharge tube 1' appearing to ball or ellipse shape can shorten the length of the discharge tube for obtaining better distribution curve flux; the last is that the increased gaps between the adjacent discharge tubes 1' improves the cooling condition facilitating to reducing the temperature of the working space and improve the luminous flux per watt, meanwhile the working space temperature of the ballast is reduced too, further to improve the reliability of the ball compact fluorescent lamps (CFL).

But, in accordance with the background technology, the target and the actual effect of the invention, the curved leg tube 11' of the discharge tube 1' having a certain stereo-radian and arranged in radial following a sphere, as shown in Fig. 3, is laid out on the sphere surface in uniform distribution for facilitating to obtaining better distribution curve flux and uniform ball light source, but manufacturing the leg tubes 11' of the discharge tube 1' having said stereo-radian, on different position with different curvature radius, is difficult to carry out automation scale production, just only by manual, it not only increases the production cost with low efficiency, but also the rejection is kept in high level. On the other hand, this invention just only is used to produce big power compact fluorescent lamps (CFL) (above 28W with 12~18mm diameter glass tube) so far in the market, but the smaller power compact fluorescent lamps (CFL) (lower than 26W with smaller than 12mm diameter glass tube) is hard to come out.

Therefore, the ball-shaped compact fluorescent lamps (CFL) provided by the patent: ZL01253432.3 although has high luminous flux per watt, short discharge tube, the better distribution curve flux of the ball light source and good cooling condition features, but also difficult to carry out industrial scale production, especially in small power with little diameter glass tube. So its structure should be innovated essentially.

### OBJECTS AND SUMMARY OF THE INVENTION

It is therefore a main object of the present invention to provide a compact fluorescent lamps (CFL) discharge tube and a method and apparatus for manufacturing the same, which not only remain the high luminous flux per watt, short discharge tube, the better distribution curve flux of the ball light source and good cooling condition features, but also it can be suit to industrial scale production in one-shot modeling with low production cost, high efficiency and low rejection.

For achieving the above-mentioned object, the present invention provides a one-shot modeled compact fluorescent lamps (CFL) discharge tube, and a whole compact fluorescent lamps (CFL) is typically constituted of several said discharge tubes, wherein said discharge tube appears to an U-shaped glass tube with two close parallel leg tubes, and said both parallel leg tubes are bent to a curve with a certain curvature radius simultaneously, just as appearing to ")" shape in the side view.

The diameter of said leg tube of the discharge tube is 6~12mm.

Said discharge tube is bent to an arc or an arc with ellipticity.

The number of the discharge tubes is in 2~5 or more.

Several said discharge tubes are integrated into a whole compact fluorescent lamps (CFL), which can be configured to a circle, an ellipse, a rectangle, a triangle or a polygon in top view.

The method of manufacturing the same is to follow the below processes:
The first step, put the original glass tube on the conveyer to send into heater, heat the desired portion bending to U-shaped in stage, just as the bending portion is in highest temperature to melting soft, the other portions like the leg tubes are next to the curved segment;
The second step, bend the thermal-melting glass tube to U-shaped;
The third step, put the bent U-shaped glass tube into the modeling cavity and male dies;
The fourth step, by operating with mechanical arm, close the cavity die and the male die so that the bent U-glass tube is embedded into the U-groove curved in the curvature radius;
The fifth step, blow up the bending or distorting portion of the U-glass tube so as to fill out the U-groove of the closed die via the straight portion like the leg tube;
The sixth step, by operating with the mechanical arm, open the cavity die and the male die, a finished glass tube can be stripped.

In said first step, according to the sinuosity of the glass tube, different segment is treated with different temperature by heating; for example, using different temperature flame heats different segment, or using same temperature flame treats different segment with different time to get different temperature, also using different temperature flame treats different segment with different time to get different temperature.

In said first step, the glass tube is conveyed to lying above three wide-section flaming nozzles having different wide just as one or three flaming segments to be heated to melt soft.

In said first step, the wide-nozzles are arranged in the sequence: single seg-ment→ single segment→ three segments, or single → three → single.

The one-shot modeling die used for automatically manufacturing said U-glass tube is typically comprised of a male die and a cavity die, the die parting face is formed along with curved axils of the discharge tube so that the U-groove is divided two half-portions respectively formed on the cavity die and the male die along with the die parting face, the cross-section of the U-groove on each die appears to half circle.

The radius of the U-groove is 2.5~6.5mm, the prefer value is 4.0~6.0mm.

The U-groove on the cavity die is kept in smooth, and the bottom side is built upon with ejector pin with a cone tip for facilitating to stripping.

As utilizing above-mentioned project, the present invention has follows advantages:
1. due to the discharge tube consisted of two closing parallel leg tubes with same curvature radius appearing to ")" shape in side view, as increasing the gap between two adjacent tube units (about more than six times of the column wide of each tube unit), so as to make the light given out from the inside wall of the opposite discharge tube pass through the gap to shoot out for improving the luminous flux per watt;
2. in said compact fluorescent lamps (CFL) discharge tube, each tube unit is consisted of two closing parallel leg tubes with same curvature radius appearing to ")" shape in side view, so the length of the tube unit is shortened comparing to the columnar compact fluorescent lamps (CFL) tube unit, the whole length of the lamp is shortened so that the structure becomes to com-pacter;
3. the gap between the adjacent compact fluorescent lamps (CFL) discharge tubes is increased, the cooling condition is improved to facilitate to reducing the temperature of the working space and improve the luminous flux per watt, meanwhile the working space temperature of the ballast is reduced too, further to improve the reliability of the ball compact fluorescent lamps and the lifespan;
4. due to the discharge tube consisted of two closing parallel leg tubes with same curvature radius appearing to ")" shape in side view, just as all the leg tubes of each discharge tube is bent to one direction, instead of the stereo-radian structure of the discharge tube in the patent ZL01253432.3, in which the leg tubes are bent in different dimensions along with the latitude and longitude of a sphere, so the each leg tube provided by the present invention is easy to be controlled in processing and more suit to industrial scale production. Even if the discharge tube is employed of U-shaped glass tube, in manufacturing, the original glass tube is heated to thermal emit soft firstly in stage segments, and bent to U-shaped, by means of the straight feature of the glass tube, the leg tubes of the U-glass tube are configured to closing parallel, then by means of modeling die, the U-glass tube is bent to a curved discharge tube with same curvature radius in a single process, the both leg tubes of the finished discharge tube are still kept in close parallel, in this way, by means of the modeling die, the single process modeling method can make the compact fluorescent lamps (CFL) manufacturing suit to industrial scale production with low production cost, high efficiency and low rejection.

In one word, the present invention not only remains the high luminous flux per watt, shorten discharge tube and good cooling condition features, but also it can be suit to industrial scale production in one-shot modeling, especially to producing smaller than 26W in power, and the diameter of the glass tube in 6~12mm range compact fluorescent lamps (CFL) discharge tube unit, with low production cost, high efficiency and low rejection.

### BRIEF DESCRIPTION OF THE DRAWINGS

Fig. 1 is a scheme showing a tube unit of the patent ZL01253432.3.
Fig. 2 is a scheme of the patent ZL01253432.3.
Fig. 3 is a cross-section view showing B-B section of Fig. 2.
Fig. 4 is a front view showing one discharge tube unit of the present invention.
Fig. 5 is a side view showing one discharge tube unit of the present invention.
Fig. 6 is a topside showing one discharge tube unit of Fig. 4.
Fig. 7 is a front view showing the structure of the present invention.
Fig. 8 is a topside view of Fig. 7.
Fig. 9 is a scheme showing the typical embodiment of the present invention.
Fig. 10 is a topside view showing another embodiment of the present invention.
Fig. 11 is a scheme showing the procedures in manufacturing of the discharge tube of the present invention.
Fig. 12 is a topside view showing the cavity die for manufacturing a discharge tube of the present invention.
Fig. 13 is a cross-section view of Fig. 12.
Fig. 14 is a right-side view showing the cavity die for manufacturing a discharge tube of the present invention.
Fig. 15 is a left-side view showing the cavity die for manufacturing a discharge tube of the present invention.
Fig. 16 is a topside view showing the male die for manufacturing a discharge tube of the present invention.
Fig. 17 is a cross-section view of Fig. 16.
Fig. 18 is a right-side view showing the male die for manufacturing a discharge tube of the present invention.
Fig. 19 is a left-side view showing the male die for manufacturing a discharge tube of the present invention.

### DETAILED DESCRIPTION OF PREFERRED EMBODIMENTS

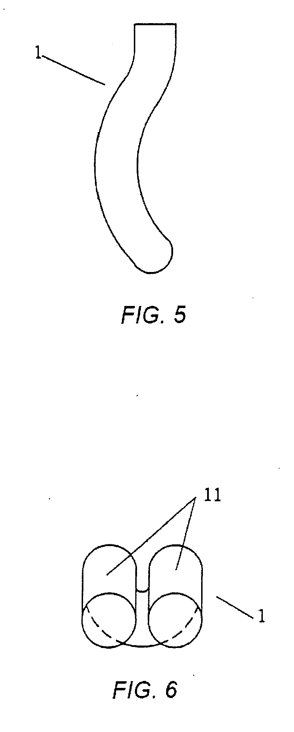

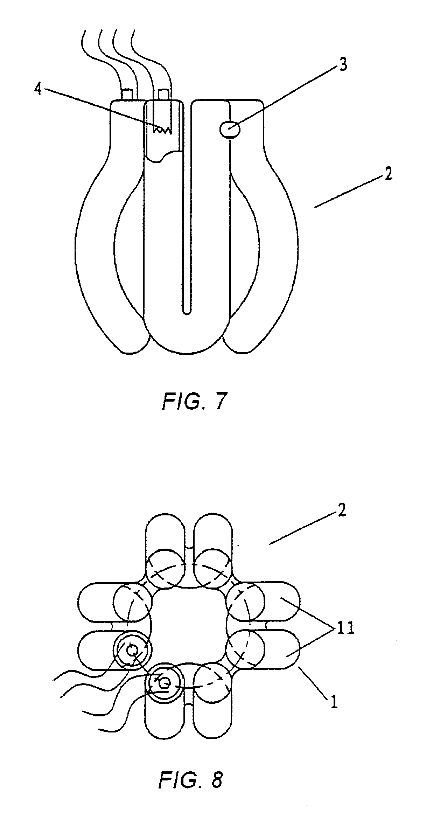

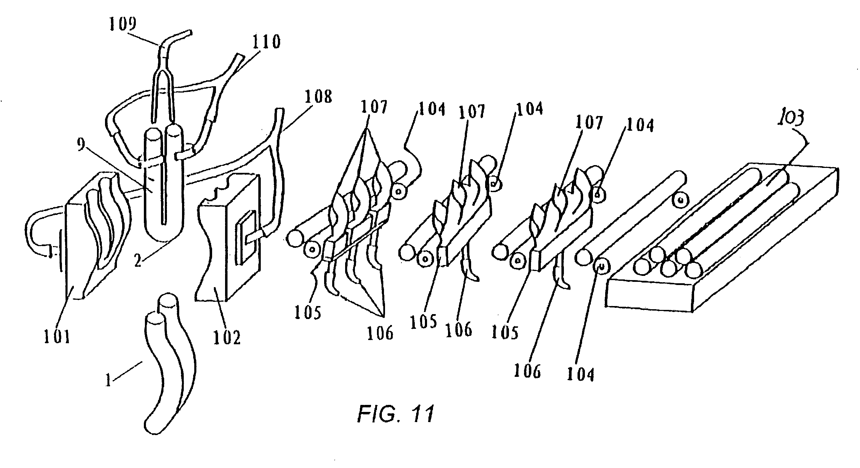

Referring to Fig. 7 and Fig. 8, a compact fluorescent lamps (CFL) 2 provided by the present invention is typically comprised of four discharge tubes 1 (the number of the discharge tubes is depended on the designed total power) connected together jumpers in bridge linkage, as shown in Fig. 4 to Fig. 6, each discharge tube 1 made of a U-shaped glass tube 9 is modeled a same curvature radius in single process by means of a modeling die 101 102, cooperating to Fig. 11, to be configured to ")" shape in side view, so that the leg tubes 11 of the same discharge tube unit 1 are close and parallel (as shown in Fig. 4, Fig. 6, Fig. 7 and Fig. 8), in this embodiment of the present invention the discharge tube 1 is bent to an arc or an arc with ellipticity (non-shown in drawing).

The diameter of the leg tube 11 of each distribution tube 1 is in 6~12mm. all the adjacent discharge tubes 1 are connected together by jumpers 3 in bridge linkage, the leg tubes 11 of the first and the last discharge tubes 11 are pre-installed with filaments 4 at insides, and all the leg tubes 11 of the discharge tube 1 are coated with earth point triad over the inside wall homogeneously, and filled with proper amount of mercury and inert gas.

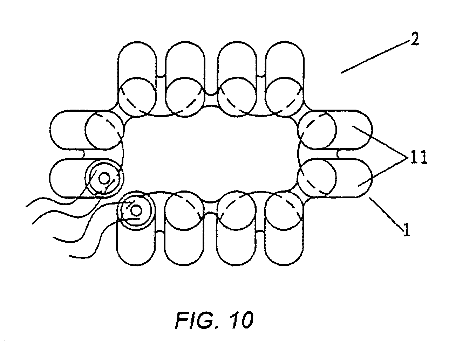

Referring to Fig. 7 and Fig. 8, in this embodiment, said discharge tubes 1 are configured to a circle arrangement by connecting together with jumpers 3 in bridge linkage to integrate to a compact fluorescent lamps CFL). Due to the closing parallel leg tube 11 of the discharge tube 1, so, the present invention can be configured to variety shape depending on the necessary, as shown in Fig. 10, all discharge tubes 1 are configured to an ellipse by connecting them together with jumpers 3 to integrate a compact fluorescent lamps (CFL), in the same way, the discharge tubes 1 also can be configured into rectangle, triangle, polygene and so on shapes.

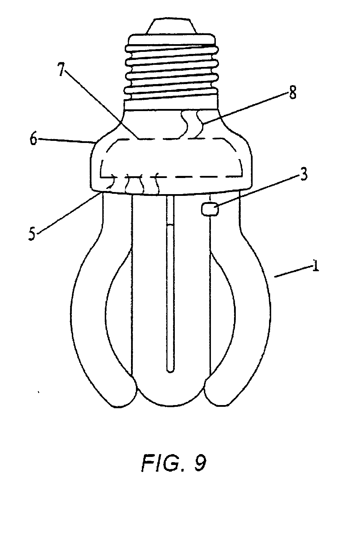

Referring to Fig. 9, the integrated tube 2 is mounted on a base 6, wires 5 lead the terminals of the filaments 4 out to the ballast 7, and cords 8 connects the output terminals of the ballast 7 to the base to combine a compact fluorescent lamps (CFL).

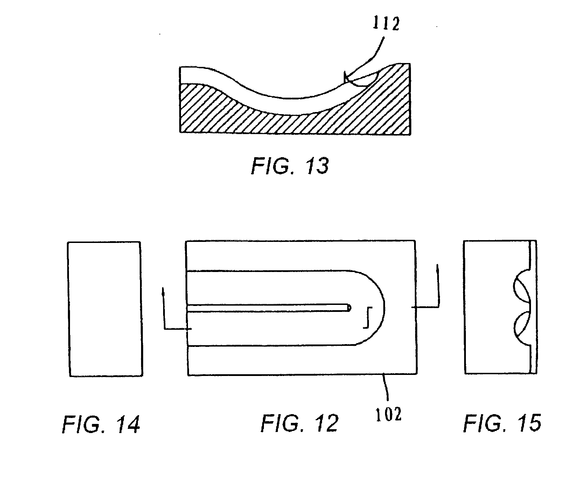

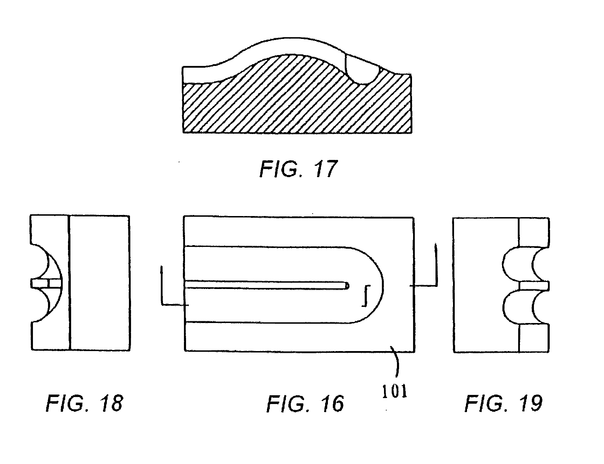

Referring to Fig. 12 to Fig.15, and Fig. 16 to Fig. 19, they are respectively shown the cavity die 102 and the male die 101 of the modeling die used for manufacturing U-glass tube, one key apparatus of the present invention. The die parting face (just as contacting face of the modeling die) of the cavity die 102 and the male die 101 is formed along with curved axils of the desired discharge tube 1 so that the U-groove is divided two half-portions respectively formed on the cavity die 102 and the male die 101 along with the die parting face, the cross-section of the U-groove on each die appears to half circle, the radius of said U-groove is in 4.0~6.0mm, the U-groove on the cavity die is built upon with ejector pin with a cone tip at the bottom side for facilitating to stripping.

Referring to Fig. 11, in processing the U-glass discharge tube 1, firstly put the original glass tube 103 on the conveyer 104 (other conveyers can be selected also) to send into heater, heat the desired portion bending to U-shaped in stage, just as the bending portion is in highest temperature to melting soft, the other portions like the leg tubes 11 are next to the curved segment, said heater includes wide nozzles 105 connecting to a gas inlet pipe 106, as shown in Fig. 11, in the heater, there are three nozzles 105 in different wide individual one segment or three segments shooting flame, in which the wide-nozzles 105 are arranged in the sequence: single segment→ single segment → three segments, of course or single → three → single; the gas led by the inlet pipe 106 is shot out respectively from the nozzles 105 to be ignited to form three beams of flame 107 to treat the glass tube to heat-melting soft in heating process, in operation, according to the different deformed segment of the straight glass tube 103, the parameters of flame temperature and heating time and so on can be selected so as to heat the different portion into different softness, so the staged heating method is the key of the present invention, in which the different segment of the straight glass tube 103 is treaded with different heating temperature, or different temperature flame, also or with same temperature flame but different heating time, also or with different temperature flame and different heating time, and so on; in addition more, by means of mechanical arms 110, bent the straight glass tube 103 to a U-glass tube 9, and by taking the advantages of the stiff feature of the original straight glass tube, the leg tubes 11 of the U-glass tube 9 are kept in parallel; then plant said U-glass tube 9 into the space between the modeling die 101 102; by operating with mechanical arm 108 controlling open or close the die, close the cavity die 102 and the male die 101 so that the bent U-glass tube 9 is pressed into the U-groove curved in the curvature radius; then blow up the bending or distorting portion of the U-glass tube 9 so as to fill out the U-groove of the closed die 101 102 via the straight portion like the leg tube 11; by operating with the mechanical arm 108, open the cavity die 102 and the male die 101, a finished glass discharge tube 1 can be stripped, in which the two leg tube 11 are parallel and close, so the present invention is suit to industrial scale production in one-shot modeling with low production cost, high efficiency and low rejection.

Above-mentioned embodiment of the present invention is just only to illustrate the principle of the present invention, but not limits it to be used in processing to other shaped discharge tubes, except for said U-shaped, the discharge tube can be in Π-shaped, H-shaped and so on discharge tube.

## Claims

1. An automatic one-shot-modeled compact fluorescent lamps (CFL) discharge tube typically constituted of several said discharge tubes, wherein said discharge tube appears to an U-shaped glass tube with two close parallel leg tubes, and said both parallel leg tubes are bent to a curve with a certain curvature radius simultaneously, just as appearing to ")" shape in the side view.

2. An automatic one-shot-modeled compact fluorescent lamps (CFL) discharge tube as claimed in claim 1, wherein the diameter of said leg tube of the discharge tube is 6~12mm.

3. An automatic one-shot-modeled compact fluorescent lamps (CFL) discharge tube as claimed in claim 1, wherein said discharge tube is bent to an arc or an arc with ellipticity.

4. An automatic one-shot-modeled compact fluorescent lamps (CFL) discharge tube as claimed in claim 1, wherein the number of the discharge tubes is in 2~5 or more.

5. An automatic one-shot-modeled compact fluorescent lamps (CFL) discharge tube as claimed in claim 1, wherein several said discharge tubes are integrated into a whole compact fluorescent lamps (CFL), which can be configured to a circle, an ellipse, a rectangle, a triangle or a polygon in top view.

6. A method of manufacturing the automatic one-shot-modeled compact fluorescent lamps (CFL) discharge tube, wherein the procedures are to follow the below steps: the first step, put the original glass tube on the conveyer to send into heater, heat the desired portion bending to U-shaped in stage, just as the bending portion is in highest temperature to melting soft, the other portions like the leg tubes are next to the curved segment; the second step, bend the thermal-melting glass tube to U-shaped; the third step, put the bent U-shaped glass tube into the modeling cavity and male dies; the fourth step, by operating with mechanical arm, close the cavity die and the male die so that the bent U-glass tube is embedded into the U-groove curved in the curvature radius; the fifth step, blow up the bending or distorting portion of the U-glass tube so as to fill out the U-groove of the closed die via the straight portion like the leg tube; the sixth step, by operating with the mechanical arm, open the cavity die and the male die, a finished glass tube can be stripped.

7. A method of manufacturing the automatic one-shot-modeled compact fluorescent lamps (CFL) discharge tube as claimed in claim 6, wherein in said first step, the glass tube is conveyed to lying above three wide-section flaming nozzles having different wide just as one or three flaming segments to be heated to melt soft.

8. A method of manufacturing the automatic one-shot-modeled compact fluorescent lamps (CFL) discharge tube as claimed in claim 6, wherein in said first step, the wide-nozzles are arranged in the sequence: single segment→ single segment→ three segments.

9. A method of manufacturing the automatic one-shot-modeled compact fluorescent lamps (CFL) discharge tube as claimed in claim 6, wherein in said first step, the wide-nozzles are arranged in the sequence: single segment → three segments→ single segment.

10. A method of manufacturing the automatic one-shot-modeled compact fluorescent lamps (CFL) discharge tube as claimed in claim 6, wherein in said first step, according to the sinuosity of the glass tube, different segment is treated with different heating temperature.

11. A method of manufacturing the automatic one-shot-modeled compact fluorescent lamps (CFL) discharge tube as claimed in claim 10, wherein in the first step, according to the sinuosity of the glass tube, different segment is treated with different heating temperature flame in stage treatment.

12. A method of manufacturing the automatic one-shot-modeled compact fluorescent lamps (CFL) discharge tube as claimed in claim 10, wherein in the first step, according to the sinuosity of the glass tube, different segment is treated with same heating temperature flame and different heating time in stage treatment.

13. A method of manufacturing the automatic one-shot-modeled compact fluorescent lamps (CFL) discharge tube as claimed in claim 10, wherein in the first step, according to the sinuosity of the glass tube, different segment is treated with different heating temperature flame and different heating time in stage treatment.

14. A modeling die used for manufacturing the automatic one-shot-modeled compact fluorescent lamps (CFL) discharge tube typically includes a cavity die and a male die, wherein the die parting face is formed along with curved axils of the discharge tube so that the U-groove is divided two half-portions respectively formed on the cavity die and the male die along with the die parting face, the cross-section of the U-groove on each die appears to half circle.

15. A modeling die used for manufacturing the automatic one-shot-modeled compact fluorescent lamps (CFL) discharge tube as claimed in claim 14, wherein the radius of the U-groove is 2.5~6.5mm, the prefer value is 4.0~6.0mm.

16. A modeling die used for manufacturing the automatic one-shot-modeled compact fluorescent lamps (CFL) discharge tube as claimed in claim 14, wherein the U-groove on the cavity die is kept in smooth, and the bottom side is built upon with ejector pin with a cone tip for facilitating to stripping.
